# EUROPEAN PATENT SPECIFICATION

(11) **EP 1 247 729 B1**
(45) Date of publication and mention of the grant of the patent: **27.06.2007**
(21) Application number: 02004865.8
(22) Date of filing: 04.03.2002
(51) Int. Cl.: B62K 21/08

(54) **Steering damper device**
Lenkungsdämpfer
Amortisseur de direction

(30) Priority: 06.04.2001 JP 2001108981
(43) Date of publication of application: 09.10.2002
(73) Proprietor: HONDA GIKEN KOGYO KABUSHIKI KAISHA, Minato-ku, Tokyo (JP)
(72) Inventor: Hasegawa, Yosuke, Wako-shi, Saitama (JP); Itabashi, Takeyasu, Wako-shi, Saitama (JP); Hayashi, Kanji, Wako-shi, Saitama (JP); Wakabayashi, Takeshi, Wako-shi, Saitama (JP); Bunya, Osamu, Wako-shi, Saitama (JP)
(74) Representative: Liska, Horst

(56) References cited:
- US-A- 4 773 514
- US-A- 4 811 807
- US-A- 5 076 383
- US-A- 5 515 275

## Description

This invention relates to a steering damper device for a motorcycle to attenuate an oscillation of its handlebar during running operation, and more particularly a device capable of making a damping force variable.

In order to prevent any oscillation of a handlebar caused by a kickback or the like under external disturbance, it is well known in the art to provide a steering damper device generating a damping force against oscillation (as one example, refer to Japanese Patent No. 2,593,461). In addition, it is also well known in the art to provide a device generating a damping force only when it is required and making a damping force variable in other cases so as not to generate any surplus damping force and for example, there are provided a device for controlling it in response to a steering angle and a running speed (refer to Japanese Patent Laid-Open No. Sho 63-64888) and a device for controlling it in response to a variation in a load of the front wheel (refer to Japanese Patent Publication No. Hei 7-74023) and the like, such as disclosed in closest prior art document US 4811807 which discloses all the features of the preamble of independent claim 1.

As disclosed in Japanese Patent Publication No. Hei 7-74023, when a front wheel load is decreased, a kickback phenomenon may easily be produced, and either an inner pressure at a front fork or its stroke in this case detects the decreased front wheel load. However, usually a pressure in the front fork is changed in response to its inner temperature, so that it is difficult to perform an accurate sensing of the front wheel load. In addition, when the stroke of the front wheel is detected, a structure of detecting the stroke becomes complicated and a cost required for the entire vehicle body is increased. In view of this fact, it is desired to detect the front wheel load by a more accurate and simple detecting structure. This invention realizes such a request as described above.

In order to solve the aforesaid problem, the steering damper device of the present invention in which a damping force is applied to a turning operation of a front wheel steering system supported at a vehicle body front segment and a value of the damping force is made variable characterized in that there is provided an acceleration speed sensing means for sensing an acceleration speed of the vehicle body and only when the acceleration speed exceeds a predetermined threshold value, a damping force is generated at the steering damper.

In this case, it is possible to generate a damping force at the steering damper only when both a speed of the vehicle body and an acceleration speed of the vehicle body exceed the predetermined threshold values. In addition, it is also possible to cause the damping force of the steering damper to be changed in response to a speed and/or an acceleration speed of the vehicle body.

Further, it is also possible to detect a speed of the vehicle body in response to a gear position and the number of rotation of the engine and to detect an acceleration speed of the vehicle body in response to an opening speed of the throttle.

In accordance with the present invention, when an acceleration speed of the vehicle body exceeding a predetermined threshold value is generated, the front wheel load is decreased, so that the kickback may easily be generated. However, in such a case as described above, it is possible to generate a damping force at the steering damper and to restrict the kickback. In this case, since an acceleration speed of the vehicle body is not influenced by a temperature, a detection of the acceleration speed is not made difficult as found in the prior art, a complex structure for use in detecting the acceleration speed is not required, resulting in that a more accurate and simple control can be carried out.

At this time, in addition to the acceleration speed, if the vehicle body speed is also applied as a controlling condition and a damping force is generated only when the vehicle body speed exceeds a predetermined threshold value, a controlling operation against prevention of kickback becomes more accurate. This state is attained on the basis of the fact that a relative large acceleration speed is apt to be generated at a low vehicle speed and a relative low acceleration speed is apt to be generated at a high vehicle speed, so that a controlling of only the acceleration speed can be corrected.

Further, if the damping force is changed in response to either a vehicle body speed or a vehicle acceleration speed or both of them, it is possible to generate an appropriate damping force of the steering damper responding to an operating state.

In addition, when a vehicle body speed is detected in response to both a gear position and the number of rotation of an engine and an acceleration speed is detected in response to a throttle opening speed, it is not especially necessary to arrange an exclusive acceleration speed sensor and a vehicle body speed sensor and both a vehicle body speed and a vehicle acceleration speed can be detected accurately, so that it is possible to generate an appropriate damping force of the steering damper.

Referring now to the drawings, one preferred embodiment of the present invention will be described as follows.

Fig. 1 is a perspective view for showing a motorcycle to which the preferred embodiment is applied.

Fig. 2 is a side elevational view for showing a vehicle body front segment to indicate a part of the steering damper device.

Fig. 3 is a top plan view for showing the part of the steering damper device.

Fig. 4 is a view for showing a schematic structure of the steering damper.

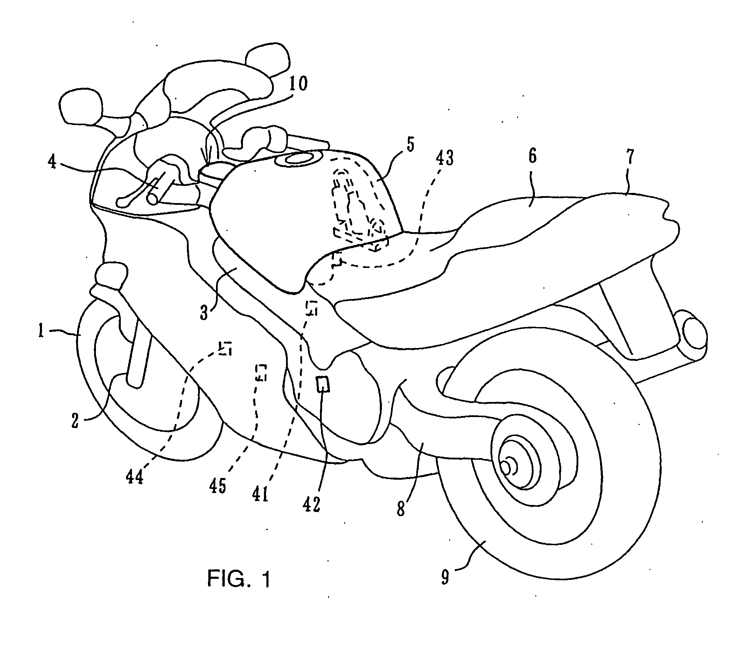

In Fig. 1, the upper part of front forks 2 supporting a front wheel 1 at their lower ends is connected to the front part of a vehicle body frame 3 and the upper part can be turned by a handlebar 4. A fuel tank 5 is supported on the vehicle body frame 3. Reference numeral 6 denotes a seat, reference numeral 7 denotes a rear cowl, reference numeral 8 denotes a rear swing arm and reference numeral 9 denotes a rear wheel.

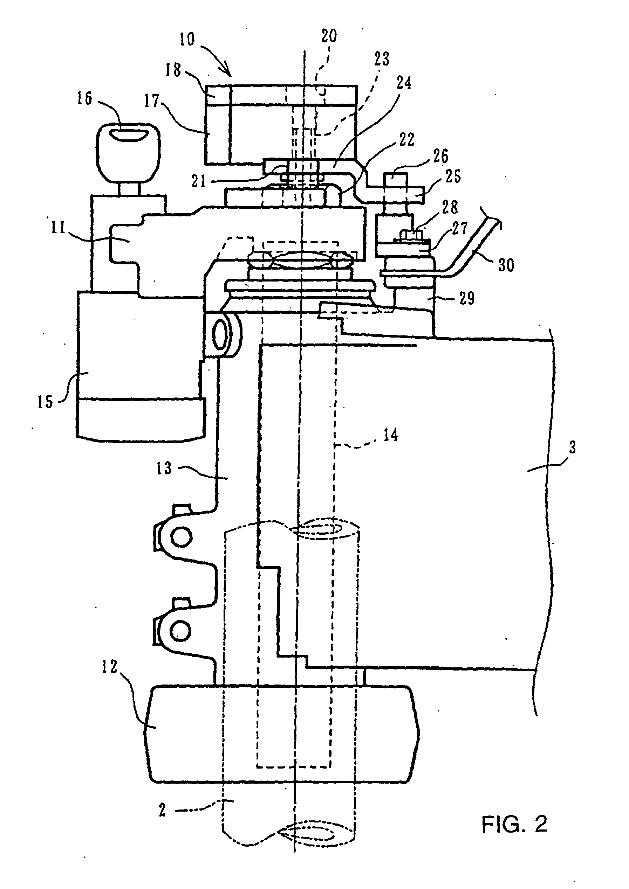

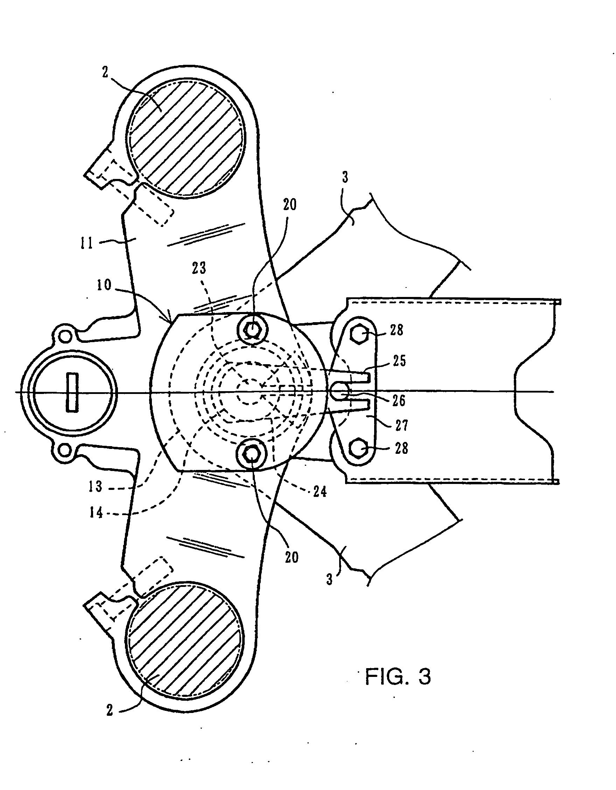

Then, a steering damper will be described. As shown in Figs. 2 and 3, a steering damper 10 is arranged between a top bridge 11 having the handlebar 4 fixed thereto and the front end of the vehicle body frame 3. The top bridge 11 is a member integrally assembled with a steering shaft 14 (indicated by a center line) supported at a head pipe 13 by a lower bottom bridge 12 being held therebetween. The top bridge 11, bottom bridge 12 and steering shaft 14 are integrally turned.

Each of the upper segments of a pair of right and left front forks 2 is supported at the top bridge 11 and the bottom bridge 12, respectively. The head pipe 13 is a pipe-like segment integrally assembled with the front ends of the vehicle body frames 3. The vehicle body frames 3 in a pair of right and left segments extend from the head pipe 13 in a rearward direction (Fig. 3). A steering lock 15 is arranged in front of the head pipe 13 and its lock is unlocked with a key 16.

The steering damper 10 of the preferred embodiment is a hydraulic damper for preventing the kickback which is comprised of a main body 17 and a lid 18, and the steering damper is fastened with a bolt 20 to a nut segment arranged at a hub 21 on the top bridge 11. At this time, the main body 17 and the lid 18 are also integrally assembled with the bolt 20. Reference numeral 22 denotes a nut for connecting the top bridge 11 with the upper end of the steering shaft 14.

A shaft 23 is arranged within the steering damper 10 with its axis being directed in an upward or downward direction as shown in Fig. 2, the lower end of the shaft 23 extends out of the main body 17 in a downward direction and integrally formed with the front end of the arm 24. The shaft 23 is coaxially arranged at the steering shaft 14.

The arm 24 is bent in a crank-like shape as viewed in a side elevational view and extends in a forward or rearward direction at the center of the vehicle body as viewed in a top plan view. The front end of the arm extends upwardly toward the upper part of the nut 22 and integrally assembled with the shaft 23 projecting into the steering damper 10. The rear end of the arm 24 forms forked ends 25 and a hub 26 of the vehicle body frame 3 is fitted to the forked ends.

The hub 26 is arranged at the central part of a bracket 27 to project upwardly. The bracket 27 at its both right and left ends is fixed with bolts 28 to a hub 29 arranged at a central part of the front end of the front wheel 1. A stay 30 projecting from the front end of the fuel tank 5 is fastened together on the hub 29 by bolts 28.

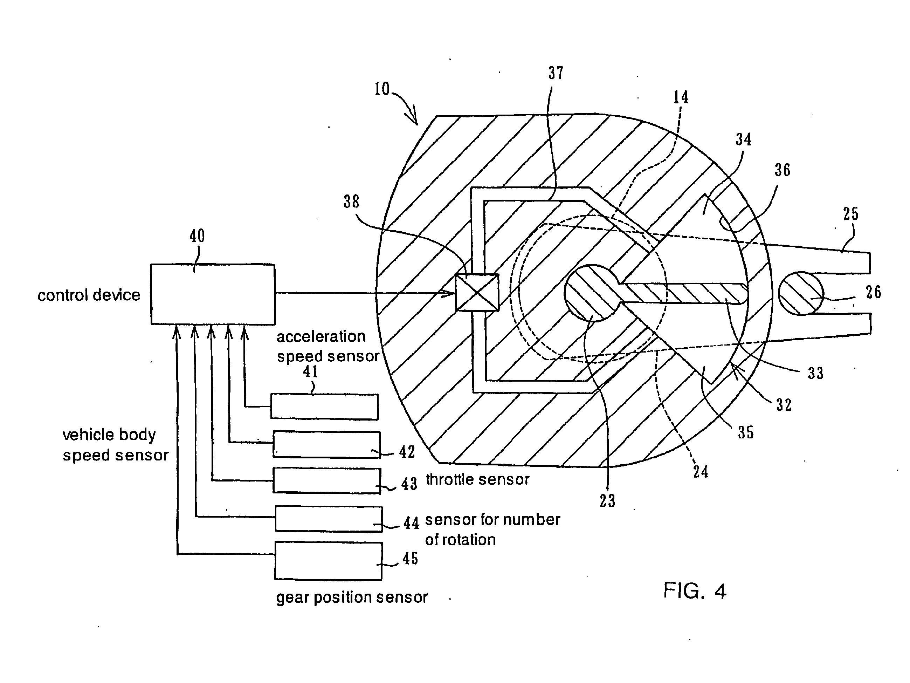

Fig. 4 shows schematically a structure of the steering damper 10. A fan-like liquid chamber 32 expanding in a rearward direction is arranged inside the steering damper 10, a shaft 23 is positioned at its essential position, and an inner part of the liquid chamber 32 is divided into a right liquid chamber 34 and a left liquid chamber 35 by a wing-like segment 33 extending rearwardly integrally from the shaft 23.

The extremity end of the wing-like segment 33 forms a sliding surface and slidably contacts with the inner surface of an arcuate wall 36 of the liquid chamber 32. Non-compressive liquid such as oil or the like is sealingly filled in the right liquid chamber 34 and the left liquid chamber 35. The right liquid chamber 34 and the left liquid chamber 35 are connected by a bypass passage 37. A variable valve 38 is arranged at the midway part of the bypass passage 37. The variable valve 38 has a metering passage for use in generating a damping force and the variable valve can meter the metering passage by changing a sectional area of the metering passage. However, the variable valve 38 is not restricted to such a structure as above and various types of well-known structure can be employed.

A control device 40 controls metering of the variable valve 38. The control device 40 is constituted by a microcomputer or the like. This control device 40 controls the variable valve 38 in response to each of the sensing signals of an acceleration speed sensor 41, vehicle body speed sensor 42, throttle sensor 43, rotation sensor 44 for an engine and gear position sensor 45 or the like. A metering of the variable valve 38 is changed to adjust a damping force under a predetermined condition.

A method for controlling damping force of the steering damper 10 performed by the control device 40 can be classified into one case in which the damping force is generated when the damping force exceeds a predetermined threshold value of acceleration speed and the other case in which the fact that a vehicle body speed exceeds the threshold value is adapted to the former case. In addition, it is also possible to change the damping force in response to an acceleration speed and a vehicle body speed. Further, the throttle sensor 43 is used in place of the acceleration speed sensor 41, and the rotation sensor 44 for the engine and the gear position sensor 45 are used in place of a vehicle body speed sensor 42.

Each of the aforesaid sensors is a well-known sensor. The acceleration speed sensor 41 is a G sensor for sensing a vehicle body acceleration speed and this sensor is installed at an appropriate location in a vehicle. The vehicle speed sensor 42 detects a vehicle speed in reference to the number of rotation of the output sprocket of an engine or the like. The throttle sensor 43 detects a degree of opening of the throttle arranged in an intake passage, the rotation sensor 44 of the engine detects the number of rotation of the crank shaft and the gear position sensor 45 detects a present gear position in the transmission.

Next, an action of the present preferred embodiment will be described. When an acceleration speed detected by the acceleration speed sensor 41 does not reach a predetermined threshold value, it is judged that there is a less possibility that a kickback occurs and the control device 40 does not generate any damping force at the steering damper 10 and further it does not increase a handlebar load, so that a smooth and comfortable steering operation can be attained. In turn, when the value exceeds a predetermined threshold value, the front wheel load becomes light, it fulfills a kickback generating condition in which the kickback may easily be generated, so that the control device 40 changes the variable valve 38 to its metering side to meter the bypass passage 37, increases a flowing resistance of liquid and increases a damping force.

As a result, a liquid flow between the right liquid chamber 34 and the left liquid chamber 35 is restricted to restrict a turning of the steering shaft 14 and further restrict occurrence of the kickback. With such an arrangement as above, it is possible to eliminate influence of temperature as found in the prior art front wheel load sensing operation and this sensing operation can be carried out by a simple structure.

As a result, turning operation of the steering shaft 14 and the steering system caused by the kickback is restricted.

At this time, when a vehicle speed is monitored in response to a sensing signal of the vehicle body speed sensor 42 and the aforesaid damping force is generated only when its acceleration speed exceeds a predetermined threshold value and a vehicle body speed exceeds a predetermined threshold value, it can be controlled more accurately in reference to an acceleration speed and a vehicle body speed. That is, this fact is based on an empiric rule that occurrence of an acceleration speed is easily produced during a low speed running of a vehicle and occurrence of an acceleration speed is easily reduced during a high speed running of the vehicle, and the front wheel load can be held more accurately, so that its variation caused by a vehicle body speed at the time of judgment with a single acceleration speed is corrected and a more accurate control corresponding to an operating state becomes possible.

Additionally, a damping force is not only generated only when the value exceeds a threshold value as described above, but also the damping force can be changed in a multi-stage manner or continuous manner in response to either one of an acceleration speed or a vehicle body speed or both of them, and if such an arrangement is applied, a more appropriate control over the steering damper 10 corresponding to the operating state becomes possible.

Further, an acceleration speed can be calculated in response to a sensing signal of the throttle sensor 43 for sensing a variation of a degree of opening of the throttle, and a vehicle body speed can be calculated in response to sensing results of the rotation sensor 44 for sensing the number of rotation of the engine and the gear position sensor 45 for sensing a gear position. In such an arrangement as above, it does not become necessary to arrange especially the acceleration speed sensor 41 exclusively used or the vehicle body speed sensor 42, and both a vehicle body speed and a vehicle body acceleration speed can be detected accurately, so that it is possible to generate an appropriate damping force of the steering damper.

When a front wheel load becomes light, it may easily produce kickback, so that it is carried out that the front wheel load is detected to control a damping force of a steering damper. However, sensing of the front wheel load was influenced by a variation in temperature, so that its sensing was difficult and a structure for performing a sensing operation became complicated. Thus, a control showing no such a possibility as above is realized.

To achieve this, according to the invention, there is provided a rotary steering damper 10 in coaxial manner on a steering shaft and either occurrence of damping force or zero damping force is changed over by the variable valve 38 arranged at the bypass passage 37 communicating with the right liquid chamber 34 and the left liquid chamber 35. This changing-over is controlled by the control device 40, the control device 40 may generate a damping force at the steering damper 10 only when an acceleration detected by the acceleration speed sensor 41 exceeds a threshold value. In addition, when the fact that vehicle body speed detected by the vehicle body speed sensor 42 exceeds a threshold value is applied as a weighting condition for control, a change in occurrence of acceleration speed caused by a vehicle body speed can be corrected.

## Claims

1. A steering damper device in which a damping force is applied to a turning operation of a front wheel steering system (1, 2, 12, 14) supported at a vehicle body front segment and a value of the damping force is made variable **characterized in that** there is provided an acceleration speed sensing means (41) for sensing an acceleration speed of the vehicle body and only when said acceleration speed exceeds a predetermined threshold value, a damping force is generated at the steering damper (10).

2. A steering damper device according to Claim 1 **characterized in that** only when a speed of the vehicle body and an acceleration speed of the vehicle body exceed a predetermined threshold value, the damping force at the steering damper (10) is changed.

3. A steering damper device according to Claim 2 **characterized in that** a damping force of the steering damper (10) is changed in response to a speed and/or an acceleration speed of the vehicle body.

4. A steering damper device according to Claim 2 or Claim 3 **characterized in that** a speed of the vehicle body is detected in response to a gear position and the number of rotation of an engine, and an acceleration speed of the vehicle body is detected in response to an opening speed of a throttle.

## Patentansprüche

1. Lenkungsdämpfervorrichtung, in der eine Dämpfungskraft auf eine Drehoperation eines Vorderradlenksystems (1, 2, 12, 14) ausgeübt wird, das an einem vorderen Segment einer Fahrzeugkarosserie unterstützt ist, wobei ein Wert der Dämpfungskraft veränderlich gemacht wird, **dadurch gekennzeichnet, dass** ein Beschleunigungsgeschwindigkeitserfassungsmittel (41) vorgesehen ist, um eine Beschleunigungsgeschwindigkeit der Fahrzeugkarosserie zu erfassen, und nur dann, wenn die Beschleunigungsgeschwindigkeit einen vorgegebenen Schwellenwert überschreitet, eine Dämpfungskraft am Lenkungsdämpfer (10) erzeugt wird.

2. Lenkungsdämpfervorrichtung nach Anspruch 1, **dadurch gekennzeichnet, dass** nur dann, wenn eine Geschwindigkeit der Fahrzeugkarosserie und eine Beschleunigungsgeschwindigkeit der Fahrzeugkarosserie einen vorgegebenen Schwellenwert überschreiten, die Dämpfungskraft am Lenkungsdämpfer (10) verändert wird.

3. Lenkungsdämpfervorrichtung nach Anspruch 2, **dadurch gekennzeichnet, dass** eine Dämpfungskraft des Lenkungsdämpfers (10) in Reaktion auf eine Geschwindigkeit und/oder eine Beschleunigungsgeschwindigkeit der Fahrzeugkarosserie verändert wird.

4. Lenkungsdämpfervorrichtung nach Anspruch 2 oder Anspruch 3, **dadurch gekennzeichnet, dass** eine Geschwindigkeit der Fahrzeugkarosserie entsprechend einer Getriebestellung und einer Drehzahl einer Maschine erfasst wird, und eine Beschleunigungsgeschwindigkeit der Fahrzeugkarosserie entsprechend einer Öffnungsgeschwindigkeit einer Drosselklappe erfasst wird.

## Revendications

1. Amortisseur de direction dans lequel une force d'amortissement est appliquée à une opération de virage d'un système de direction de roue avant (1, 2, 12, 14) supporté au niveau d'un segment avant du corps du véhicule, et une valeur de la force d'amortissement est rendue variable, **caractérisé en ce qu'**est prévu un moyen de détection de vitesse d'accélération (41) destiné à détecter une vitesse d'accélération du corps du véhicule et, uniquement lorsque ladite vitesse d'accélération dépasse une valeur de seuil prédéterminée, une force d'amortissement est générée au niveau de l'amortisseur de direction (10).

2. Amortisseur de direction selon la revendication 1, **caractérisé en ce que**, uniquement lorsqu'une vitesse du corps du véhicule et une vitesse d'accélération du corps du véhicule dépassent une valeur de seuil prédéterminée, la force d'amortissement au niveau de l'amortisseur de direction (10) est changée.

3. Amortisseur de direction selon la revendication 2, **caractérisé en ce qu'**une force d'amortissement de l'amortisseur de direction (10) est changée en réponse à une vitesse et/ou une vitesse d'accélération du corps du véhicule.

4. Amortisseur de direction selon la revendication 2 ou la revendication 3, **caractérisé en ce qu'**une vitesse du corps du véhicule est détectée en réponse à une position de rapport de vitesse et au nombre de rotations d'un moteur, et une vitesse d'accélération du corps du véhicule est détectée en réponse à une vitesse d'ouverture d'un paillon des gaz.
